Europäisches Patentamt

European Patent Office

Office européen des brevets

(11) Publication number: **0 227 089**
**A2**

# (12) EUROPEAN PATENT APPLICATION

(21) Application number: 86117888.7

(22) Date of filing: 13.04.84

(51) Int. Cl.4: **B01D 45/14** , **F02M 35/02** , **B01D 21/26**

(30) Priority: 15.04.83 US 485156
15.04.83 US 485160
15.04.83 US 485552
15.04.83 US 485553

(43) Date of publication of application:
01.07.87 Bulletin 87/27

(60) Publication number of the earlier application in accordance with Art.76 EPC: 0 122 795

(84) Designated Contracting States:
DE FR GB IT SE

(71) Applicant: THE GARRETT CORPORATION
9851-9951 Sepulveda Boulevard P.O. Box 92248
Los Angeles, California 90009(US)

(72) Inventor: Woodworth, Lee R.
801 Malibur Meadows Drive Route 1
Calabasas California(US)
Inventor: Rowlett, Beb H.
8 Amber Sky Drive
Palos Verdes California(US)
Inventor: Nagyszalanczy, Lorant
15004 Greenlaf Street
Sherman Oaks California(US)

(74) Representative: Arthur, George Fitzgerald et al
KILBURN & STRODE 30, John Street
London WC1N 2DD(GB)

(54) **Filter for removing particulates suspended in a fluid E.G. gaseous medium.**

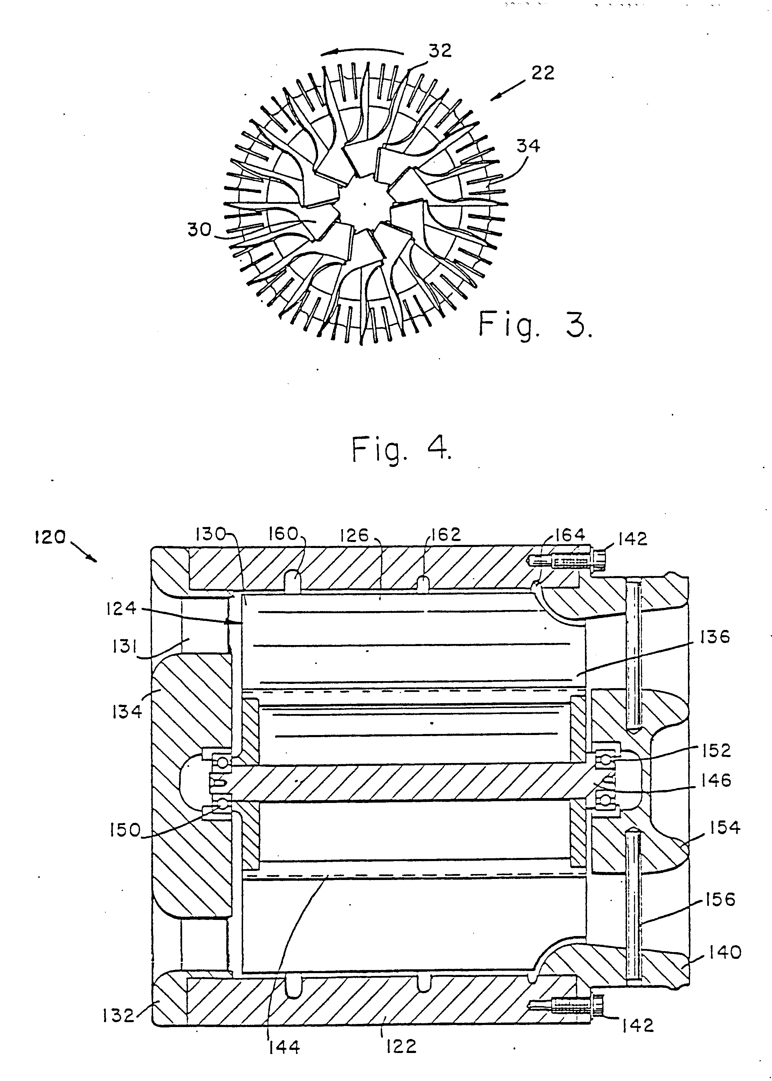

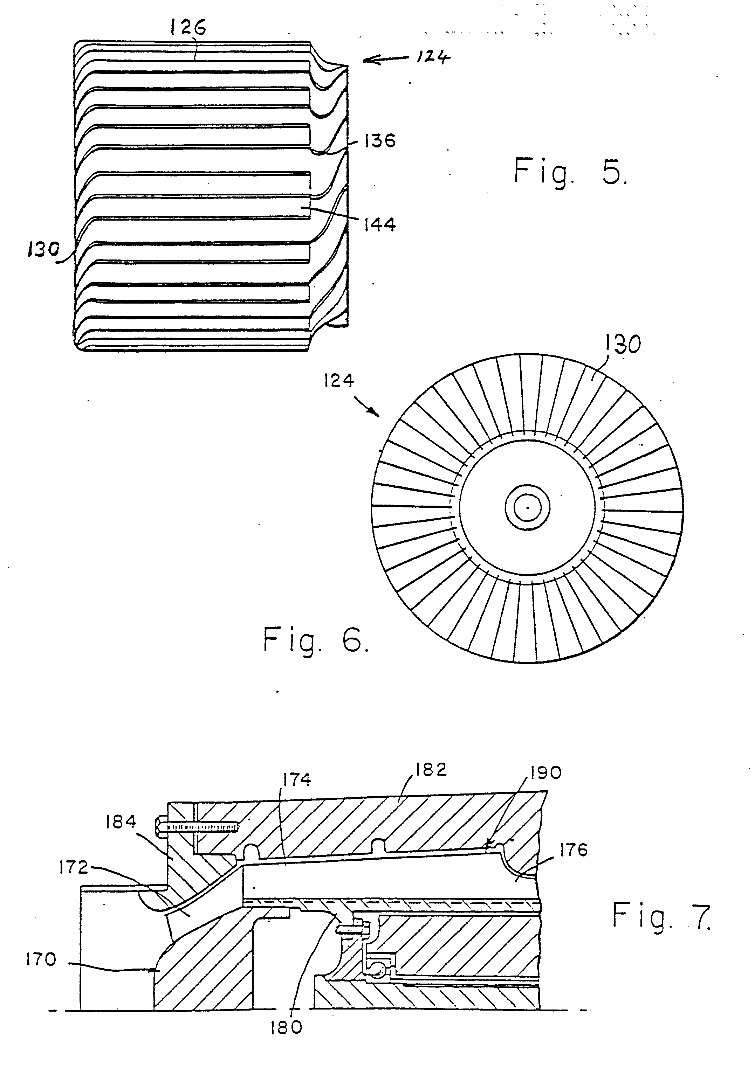

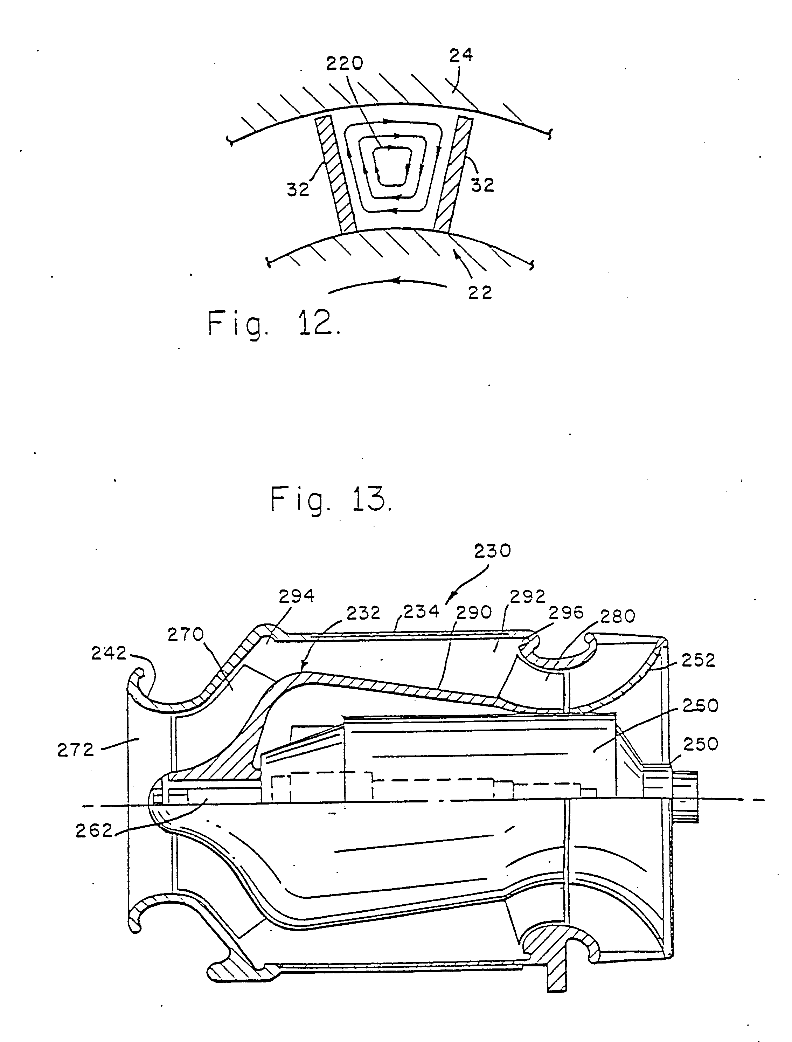

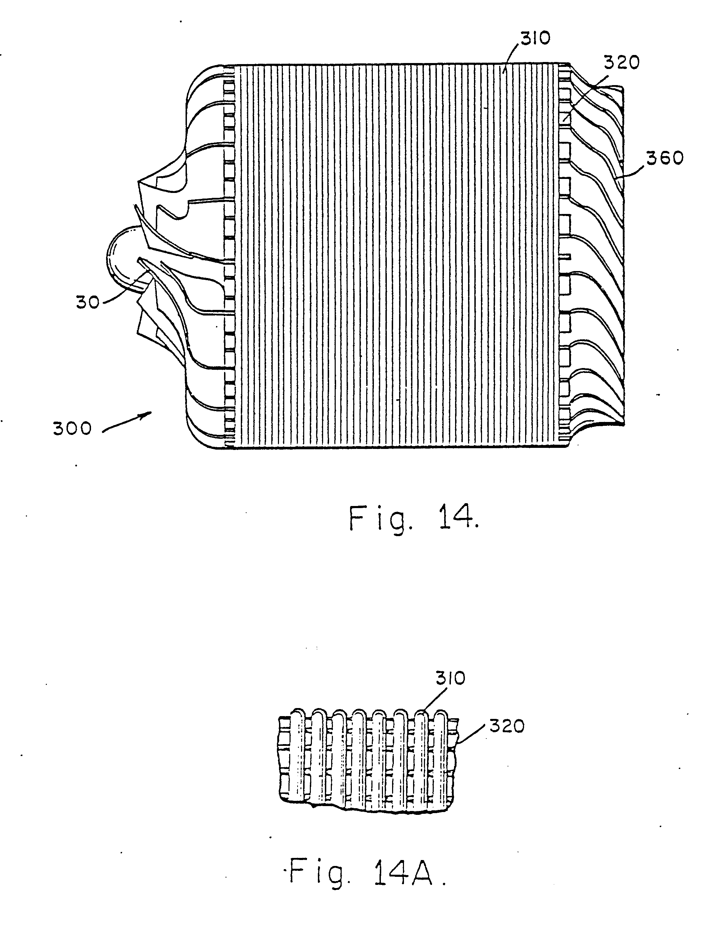

(57) A high-speed rotary filter device comprises a tubular housing (24) containing a bladed rotor (22). The rotor carries inducer blades (30) in a radial outflow configuration, driving blades (32) extending axially above the length of the rotor, and exducer blades (36), and is driven by a shaft at high speed to cause an air stream to be drawn into the housing inlet end (22) by the inducer blades and to travel axially along the housing between the driving blades (32) whilst being forced to swirl around the rotor body (34). Particles suspended in the airstream migrate centrifugally to the internal surface of the housing wall, where they are collected in circumferential grooves (100,102,104) and escape from the housing through passages (110,200,212) in the housing wall. The filtered air stream is discharged by the exducer blades (36) through the outlet end of the housing via a scroll (50). In a modification (Figure 4) the inducer blades (130) are of axial-flow configuration, and act as a turbine wheel to drive the rotor under a gas pressure differential. In another modification (Figure 7) the inducer blades (172) are of mixed flow configuration. A further modification (Figure 14) involves a porous shroud (310) in the form of a helical winding of spaced turns of wire wound around the tips of the rotor driving blades (320) to minimise secondary swirl. In an alternative design (Figure 13) to minimise secondary swirl a rotor (232) having a separator portion (23) with no driving blades is provided. The filter devices are capable of filtering out particles ranging from 2 mm diameter down to 2 microns diameter from a gas stream without clogging, and can also be used for filtering liquids.

Fig. 1.

## FILTER FOR REMOVING PARTICULATES SUSPENDED IN A FLUID E.G. GASEOUS MEDIUM.

This invention relates to filters for removing particles suspended in a gaseous or liquid medium, which will be referred to generally herein as fluid.

Filters for removing very small particulates from gaseous suspension are fairly well known in the art today. Although these filters work quite well under ideal laboratory test conditions, they all possess one major shortcoming when used in commercial, industrial, or military applications; when the airstream to be filtered contains particles varying in size from 1 or 2 microns (micrometers, μm)- (the smallest particles visible to the naked eye is approximately 20 microns in diameter) up to several hundred microns, conventional interception or barrier type filters capable of removing the smaller particles will be quickly plugged by the larger particles contained in the air stream, quickly clogging the filter and necessitating its replacement or cleaning after only a very short period of operation.

An even worse case would occur when the airstream to be filtered originated from an environment containing larger particles such as sand; such an environment would be mandated, for example, for a military vehicle capable of being operated in a desert environment. In such an environment, particle size can range up to a 2 millimeter diameter and down to as small as a 2 micron diameter, and it can be seen that under such circumstances, the larger sand particles would quickly destroy a conventional filter, disabling the vehicle.

Devices for filtering particles from an air stream are of five basic types: viscous impingement filters, electrostatic precipitators, dry interception or barrier filters, cyclone or vortex inertial separators, and a combination of an inertial separator and a barrier filter. A viscous impingement filter is made of a relatively loosely arranged filter medium, usually spun glass fibres, the surfaces of which are coated with an adhesive such as oil. Solid particles are thrown against the adhesive surface as the airstream passes through the filter, and are trapped in the filter.Viscous impingement filters are useless in removing smaller particles, since smaller particles tend to follow the path of the airstream through the filter, and thus are not removed from the airstream.

The second type of filter is the electrostatic precipitator, which passes the air stream through an ionised field which imposes an electrical charge on particles in the airstream. The ionised particles are then passed between a charged plate and a grounded plate, and are precipitated onto the grounded plate. Such electrostatic air cleaners possess many disadvantages, including their large size and awkward shape, severe limitations on the air flow which can be passed through a precipitator sized to be carried on a vehicle, the requirement of very high voltage power supplies, fairly high unit cost, and the necessity for frequent cleaning of the filter. Electrostatic precipitators thus are not practical for any use other than that in a stationary location.

The third type of filter, the dry interception or barrier type filter, is by far the most common and the most economical filter available. Barrier filters utilise a filter medium, such as spun glass fibre, which has a very fine filter diameter and a close weave to remove very small particles. While barrier filters are extremely efficient in the removal of very small particulates from an airstream, their efficiency is dependent on the absence of even a small number of somewhat larger particles. If such larger particles are present in the airstream, the barrier filter will become clogged very rapidly, necessitating replacement far too frequently to be practical.

Thus, it can be seen that in a barrier filter, two opposing considerations are present: first, it is desirable to make the filter highly efficient (close weave) in order to remove smaller particles in the airstream ; on the other hand, the barrier filter must be made somewhat less efficient (wide weave) in order to prevent it from becoming clogged too quickly. These opposing considerations are irreconcilable in an airstream containing a variety of sizes of particles from which both large and small particles must be removed.

The fourth type of filter widely used is the cyclone or vortex inertial separator, which operates on the principle that particles suspended in an airstream have greater inertia than the gas itself. The gas typically enters the separation chamber tangentially and leaves in an axial direction, although it is swirling at high speed in the chamber. Since the particles have a greater inertia than the gas, they are flung to the outer wall of the separator, from which they exit the device.

In a cyclone separator the gas is impelled into the separator with a high velocity. An alternate method uses a rotating member to induce the rotation of the airstream in the device.

Several mechanical devices operating on this principle have been manufactured, and are felt worthy of specific mention herein. United States Patent No. 3,944,380 to Kampe, and assigned to the present applicant is perhaps the best example of such a device. The Kampe patent discloses a nozzle for extracting dirt particles introduced into a radial inflow turbine. While the Kampe device is a highly efficient and useful device, it is virtually completely incapable of removing particles smaller than 10 microns, a limitation which is specifically cited in the specification. Other such devices are disclosed in United States Patent No. 3,444,672 to Alsobrooks, and in United States Patent No. 3,616,616 to Flatt, but these devices are also incapable of removing small particulates from the airstream, and are not designed to removed small particles from an airstream. The function of all three of the above disclosed devices is to remove from the airstream particles which are large enough to present a serious erosion problem on high speed portions of jet turbine engines.

Particles smaller than 10 microns need not be removed, because such particles do not present a serious erosion problem to high-speed metal surfaces, and thus do not present a premature wear threat to the devices.

Numerous other mechanical devices to separate particulates from an airstream are known in the art, but are of such a primitive state as not to merit specific mention herein.

Not only are cyclone or vortex inertial separators useless for removing small particles from an airstream, but they are generally of a fairly large size, weight, and cost, which, when weighed with their low efficiency in removal of small particles, dictates against their use.

The fifth type of apparatus used for particulate removal is a combination of an inertial separator and a barrier filter. Unfortunately, such a combination, rather than presenting the advantages of both the inertial separator and the barrier filter, presents the disadvantages of both without the advantages of either. Since inertial separators are incapable of removing particles below 10 microns diameter from the airstream, these particles will pass through the inertial separator to the barrier filter. If the barrier filter is sized to remove particles as small as 2 microns diameter, it will become clogged by the particles of up to 10 micron diameter only slightly less than if the airstream was not passed through the inertial separator at all. Therefore, the combination system will have not only the disadvantage of requiring frequent barrier filter replacement, but it will also have the disadvantage of the large size, weight, and cost of the inertial separator. Such a system would not be feasible in any but a stationary location.

Therefore, it can be seen that there are no existing filter or separator arrangements in the art which are capable of removing very small particulate matter suspended in a gaseous medium, and which are also capable of removing larger particles from the gaseous medium and are available for use over extended periods of time without requiring shutdown to replace or clean filters. There exists today an urgent need for such a filter arrangement, particularly in several vehicular applications.

The most obvious vehicular application of such a filter is to remove particles from the airstream used to supply a motor vehicle operating in a dusty environment. While general commercial and industrial motor vehicles have generally adequate filter systems available, military vehicles which are designed to operate in an extremely dusty environment, such as in a desert field of operation, have as an essential requirement a filter system which can remove virtually all particulate matter from the engine air supply. It is obvious that such a military vehicle may not use a conventional barrier filter which will have to be replaced, since such replacement during field operations would be either impractical or impossible, since the vehicle would not be able to carry a sufficient supply of spare filters. In addition, it is extremely undesirable to have a military vehicle which would require frequent maintenance such as a changing of the engine air filter.

An additional, and highly important, military utilisation for a filter capable of removing very small as well as larger particles from the air is in the cabin ventilation system of a sealed military vehicle. It is obvious that a military vehicle operating in a dusty or sandy environment will need a special ventilation system to supply the crew of the vehicle with an adequate supply of fresh air to breathe. Another reason mandating the filtering of very small particles from the crew air supply is the possibility that such a military vehicle may be called upon to operate in a post-nuclear environment. The primary carriers of radiation in such a post-nuclear environment are particles of dust, and conventional filters of the type described above do not remove small particles from the air supply. Such small particles if they were included in the air supplied by a cabin ventilation system to the crew of the vehicle, would contaminate the cabin rapidly causing radiation sickness and possible death to the crew members. Therefore, the filter device for such a cabin ventilation system must be capable of removing very small dust particles from the air circulated to the crew environment.

There are several possible commercial and industrial applications for a device capable of removing small as well as large particulate matter from a gaseous medium. The best example of such a requirement is in the exhaust system of a motor vehicle. Two particular environmental problems today are diesel soot from the exhaust of diesel engine vehicles, and lead particles from gasoline engines burning leaded gasoline.

A conventional filter system would be useless in removing such particulates, since the filtering device must not only be relatively small to be conveniently installed on the vehicle, but must be highly resistant to clogging over extended periods of time. There exists no filter device known today which is capable of lasting for an extended time in the exhaust system of a motor vehicle.

Therefore, it can be seen that it is highly desirable to construct a filter device which is capable of removing particulate matter ranging in size from sand particles to very tiny dust particles as small as approximately 2 microns from an airstream. It is desirable that such a device be utilizable as an engine intake air cleaner, removing particulate matter from the airstream supplied to a vehicle operating in a dirty, dusty, or sandy environment. Such a device may also be usable for removing very fine dust particles from the environmental air intake supply air to the crew of a vehicle; extremely small dust particles must be removed in certain application since such dust particles are primary carriers of radiation contamination. Such a filter device may also be capable of removing lead or carbon particles from the exhaust gas stream from a vehicular engine, lasting for extended periods of time without maintenance.

Further desirable requirements of such a filter device are that it be self-cleaning, that it need no replacement or cleaning of a filter element, and that it need only minimal maintenance and repair service over extended periods of use in hostile environments, for example a desert environment or the exhaust stream of an internal combustion engine.

Since such a filter device may either be used in an application in which there may be a gas pressure drop across it ( such as in the intake system or in the exhaust system of an engine) or in an application where there is no inherent gas pressure drop across the device ( such as in a environmental ventilation system supplying air to a sealed cabin) it is desirable that if the filter device requires to be driven, it should either be mechanically powered or it should be capable of being driven by the pressure drop across the device. If powered the filter device should be driven by a small, efficient motor, such as a self-contained electric motor. The filter device if pressurised may be driven by the pressure drop, and therefore should contain some type of fluid-powered driving means such as the turbine wheel in a turbocharger. The filter device should preferably also be of minimal size, weight, and cost, since it may be utilised on vehicles as small as a commercially available passenger car. It should preferably also be a bolt-on device, in which case it is necessary that the filter device be entirely self-contained.

Since the device is preferably to be self-cleaning, and not to require replacement or cleaning of a filter element, it should somehow scavenge the particles removed from the gasflow, the particles being removed from the device to a collection area. In some applications, it may further scavenge to atmospheric pressure even though the output of the device may be at less than atmospheric pressure. In the removal of the particles from the gasflow, it is highly desirable that as little of the gasflow as possible be used for purging the particles from the device, to make the device as efficient as possible.

A final desirable feature of such a filter device is that it inhibits the breakup of particles into smaller particles caused by the dynamic operation of the device. In order to do this, the particles contained in the gasflow should be removed from the device as quickly as possible and any secondary gasflows within the device must be minimised or eliminated to prevent particles from bouncing around and breaking up within the device.

According to the invention, therefore, a rotary filter device is provided in which a stream gaseous or liquid medium to be filtered, hereinafter referred to as fluid, for example an air stream, is caused to flow within a housing containing a rotor which is driven at a high rotational speed to cause the fluid to swirl around the rotor in the housing. The swirl thus generated causes small and large particles carried in suspension in the fluid stream to migrate centrifugally towards a region near the circumferential wall of the housing, from which region the migrated particles may be removed, for example through one or more apertures in the housing wall.

At least two axially-spaced grooves are formed in the internal surface of the circumferential wall of the housing for removal of the migrated particles.

This means that only a very small amount of the fluid stream flowing through the device is used as scavenging fluid to remove particulates from the device to a collection area, thus ensuring that the high volume of fluid flow through the device will not be diminished by a large scavening fluid volume requirement.

This invention provides a rotary filter device of a unique design which renders the device capable of separating both large and very small particles from a gas stream passing through the device. The device in its preferred embodiments is fully capable of removing particulate matter ranging in size from grains of sand all the way down to particles only 2 microns in diameter, over 99% of the latter particles being removed from an airstream. In one embodiment of the rotary filter device, the outlet colume gas flow from the device permitted is over 2,000 times the volume of the device itself; the impact of this figure is that the gas volume required for any particular application may be achieved using a device much smaller than barrier filters, cyclone or vortex inertial separators, or any combination thereof, and in addition the device may achieve an efficiency of a magnitude of one or two times greater than was possible using such previously known devices.

The rotary filter device may be constructed in one or two basic arrangements either powered by some type of device means, or turbo-driven by a pressure drop access the device such as would be found if the device was used as an intake or exhaust filter for an engine. The powered version may be driven by an electric motor contained in the filter device itself, or by driving a shaft extending from one end of the device.

Even with such outstanding performance characteristics, the rotary filter device boasts an exceedingly simple construction, since it is basically a rotor contained within a housing. The rotor itself is preferably cylindrical in shape, and may be provided with inducer blades at the inlet end of the rotor and exducer blades at the outlet end of the rotor, both of which cause the fluid to flow through the device and over the rotor. Three embodiments for the portion of the rotor between the inducer blades and the exducer blades are disclosed, including a first embodiment which has a number of axially extending rotor blades, referred to as driving blades, distributed around the outer circumference of the rotor between the inducer and exducer blades, a second embodiment which has a smooth surface rather than blades between the inducer and the exducer blades, and a third embodiment which has a number of axially extending driving blades similar to the first embodiment, but the driving blades being covered by a porous shroud. Both the second and third embodiments seek to overcome secondary fluid swirl between adjacent driving blades, which may be experienced in the first embodiment, reducing efficiency in that embodiment.

A variety of different geometrical arrangements for the inducer blades are disclosed, including a radial outflow arrangement which the fluid flow is drawn into the device near the axis of the device and is then forced outward to the outer circumference of the device, where the axial driving blades are located. A second geometrical arrangement is the axial flow inducer, where the fluid flows from an inlet adjoining the circumference of the rotor through the inducer blades and into the axially extending driving blades on the rotor. A third type of inducer blade geometry disclosed is a combination of the first two, and is appropriately called a mixed flow inducer.

Depending on the relative mix of large and small particles in the fluid flow to be filtered, one of these inducer geometries may be more desirable than the others.

The second main portion of the rotary filter device is the housing which surrounds the rotor, and in the embodiments with driving blades leaves only a small space between the housing and the edges of the blades. When the rotor turns at high speed, fluid flow will be present between the axially extending driving blades, and due to the high rotational speed, particles will be forced radially away from the axis of the rotor, toward the housing. Accordingly, the inside surface of the housing has the axially-spaced grooves, which in the preferred embodiment are located in planes which are perpendicular to the axis of the rotor, which grooves are called discard removing channels and are used for collecting particles which are forced outwardly away from the rotor by the high speed rotation.

Each of these discard removing channels has one or more exits from the housing, through which the particles are removed.

Several embodiments for particular discard removing channel geometry are proposed, which are novel in that they require only a very small amount of fluid flow from the main fluid stream to scavenge the particles from the device. One such configuration is the tangential discard removing channel, which runs the circumference of the interior of the housing at a uniform depth, and has one or more points of egress from the interior of the housing through which particles are ejected from the housing. A second type of discard removing channel is the scroll type channel, which increases in depth in the housing as it approaches the point at which the particles are removed from the housing of the device. An additional refinement disclosed is the use of a diffuser at the outflow points to further reduce the amount of fluid required to be diverted from the main fluid to scavenge the particles from the device.

The highlight of the disclosed configurations for discard removing channels is that they use only minimal fluid flow to remove the particles from the device. This removal may be seen as a self-cleaning or self-purging of the device, eliminating the necessity to clean the device or change filters, both of which are limitations on formerly existing devices.

The device also has means to prevent particulate breakup and secondary flow of particles causing such particulate breakup, thus further increasing the efficiency in the removal of all particular matter down to approximately 2 micron diameter.

Thus, the various specific embodiments of the invention disclosed herein accomplish objects impossible for previously existing devices to perform, such as removal of both large particles such as sand and small particles such as extremely fine dust from the air intake for an engine, or possible application in the removal of lead particles or carbon particles from the engine exhaust of a gasoline engine or a diesel engine, respectively. The present invention is also highly useful as an environmental intake filter to a sealed crew cabin in a military vehicle operating in desert-type conditions, since it will not only remove larger particulate matter, but will also remove small dust particles which are a primary carrier of radiation in a post-nuclear environment. A further application of the present invention is to remove heavies and particles from a liquid flowing through the device, the characteristics of the invention allowing for greater efficiency in the removal of small particles than that of a centrifuge.

The invention may be carried into practice in various ways, but certain specific embodiments thereof will be described by way of example only and with reference to the accompanying drawings, in which:

FIGURE 1 is an axial section showing the invention in a powered embodiment driven by a shaft, and featuring radial outflow inducer geometry and a rotor with axially extending driving blades

FIGURE 2 is a side view of the rotor of the device shown in FIGURE 1;

FIGURE 3 is the inducer end view of the rotor shown in FIGURES 1 and 2;

FIGURE 4 is an axial section through a turbo-driven embodiment of the present invention with axial inducer geometry;

FIGURE 5 is a side view of the rotor of the device shown in FIGURE 4;

FIGURE 6 is the inducer end view of the rotor shown in FIGURES 4 and 5;

FIGURE 7 shows in axial half-section a modification of the FIGURE 1 embodiment with mixed inflow inducer geometry, and an increasing diameter axial driving blade design;

FIGURE 8 is a partial cross-sectional view of the device of FIGURE 1 , FIGURE 4, or FIGURE 7 showing the tangential discard removing channel design;

FIGURE 9 is a view similar to FIGURE 8 but showing a scroll-type discard removing channel;

FIGURE 10 is a view similar to FIGURE 8 but showing the tangential discard removing channel of FIGURE 8 with a diffuser;

FIGURE 11 is a cross-sectional view of the device of FIGURE 9, but showing as a modification multiple scroll-type egress points for a single discard removing channel;

FIGURE 12 is a schematic cross-sectional view of two axially extending driving blades illustrating the secondary flow characteristics which may impede performance of the device;

FIGURE 13 is a partially cut-a-way view of a further embodiment of the invention, containing no axially extending driving blades between the inducer blades and the exducer blades, which eliminates the secondary flow shown in FIGURE 12;

FIGURE 14 is a side view of an alternative embodiment for a rotor to be used in the device shown in FIGURE 1, the rotor having a porous shroud to eliminate the secondary flow problem shown in FIGURE 12; and

FIGURE 14A, is an enlarged view of a portion of the porous shroud shown on the rotor in FIGURE 14.

In each of the illustrated embodiments, the filter device will be specifically described in its application to filtering particles from an air stream, although as already mentioned the device may be used to filter other gaseous media, such as i.e. engine exhaust gases, or even for liquid filtration.

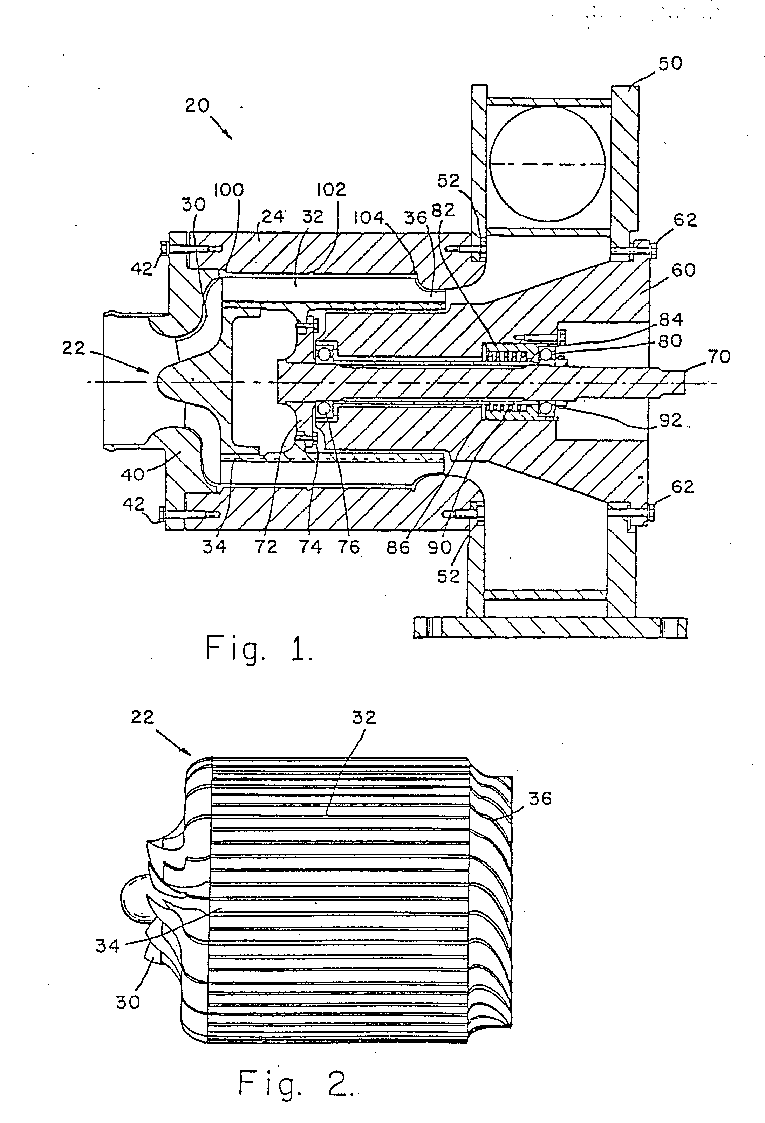

A shaft driven rotary filter device 20 embodying the principles of the present invention is shown in FIGURE 1. The two principal components of the filter device 20 are a rotor 22 and a housing 24.

The rotor 22, best shown in FIGURES 2 and 3, is basically cylindrical and is designed to rotate about the axis of the cylinder. The rotor 22 may be subdivided into three portions; an inlet portion, a separator portion, and an outlet portion.

The inlet portion consists of a number of inducer blades 30, shown mounted at the left end of the body 34 of the rotor 22 as seen in FIGURES 1 and 2, and shown in the end view of FIGURE 3. The inducer blades 30 act to draw the airstream to be cleaned into the filter device 20.

The inducer blades 30 shown in FIGURES 1,2, and 3 are arranged in a radial outflow configuration. What this means is that the airflow is drawn into the filter device 20 near the centre of the rotor 22, and then flows radially outward through the paths defined by the inducer blades 30 to reach the separator portion of the rotor 22, as best shown in FIGURE 1. Two other possible configurations for the inlet portion of the rotor 22 will be discussed later.

The separator portion of the rotor 22 consists in the primary embodiment of a number of axially extending rotor blades 32 projecting radially outwardly from a cylindrical rotor body portion 34. These blades 32 are referred to as the driving blades. The airstream within the filter device 20 will travel essentially between the driving blades 32 longitudinally from left to right in FIGURES 1 and 2. since during the time that the airstream is flowing from the inlet end of the rotor 22 toward the outlet end of the rotor 22 between the driving blades 32, the rotor 22 is rotating at a fairly high speed, particles present in the airstream will be driven in a direction radially outward from the rotor 22, since their relative weight is greater than that of the gaseous airstream.

The outlet portion of the rotor 22 consists of a number of exducer blades 36 mounted on the right hand end of the body 34, which will remove a large part of the rotational energy imparted to the airstream by the inducer blades 30 and the driving blades 32. It may be noted that while the figures show specific numbers of inducer blades 30, driving blades 32 and exducer blades 36, this should in no way imply that the present invention is limited to the specific blade configurations shown which are only specific examples.

The second basic component of the rotary filter device 20 is the housing 24, which serves two basic purposes; first, to rotatably support the rotor 22 via additional necessary hardware, and second, to closely surround the inducer blades 30, the driving blades 32, and the exducer blades 36 of the rotor 20, and to define any annular-section space between the rotor body 34 and the housing wall in which space the blades of the rotor lie. By closely surrounding all three bladed portions of the rotor 22, the housing essentially confines movement of the air stream through the filter device 20 to the areas within the bladed portions of the rotor 22. In addition to the main housing portion 24 which surrounds the driving blades 32 and the exducer blades 36, an inlet shroud 40 surrounds the inducer blades 30, ensuring that the airstream travels primarily between the inducer blades 30 when flowing through the filter device 20. The inlet shroud 40 is bolted to the main housing 24 by a number of bolts 42 around the perimeter of the inlet shroud 40.

Upon leaving the rotor 22 through the exducer blades 36, the airstream may still have some rotational energy not removed by the exducer blades 36, and will be channelled out of the filter device 20 through a scroll assembly 50 which is bolted onto the main housing portion 24 by a number of bolts 52. The scroll assembly, which in the embodiment shown in FIGURE 1 is of a diameter larger than the diameter of the rotor 22 and the main housing 24, has a single tangential outlet for the airstream passing through the filter device 20. As will be apparent in discussion of additional figures accompanying this specification, the configuration of the scroll assembly 50 is only one of a number of possible configurations by which the airstream may exit the filter device 20, and, in fact, is more useful in a stationery location application than in a vehicular application, the latter of which is the primary concern herein.

The rotor 22 is rotatably mounted on a shaft carrier housing 60, which, in turn, is mounted to the scroll assembly 50 by a number of bolts 62 extending circumferentially around the shaft carrier housing 60. Thus, it may be seen that the shaft carrier housing 60 extends into the filter device 20 from the outlet end adjacent the scroll assembly 50 and actually is within a portion of the cylindrical rotor body 34.

A shaft 70 extending through the shaft carrier housing 60 into the interior of the cylindrical rotor body 34 is press-fitted onto a shaft carrier flange 72, which, in turn, is bolted onto the cylindrical rotor body 34 by a number of bolts 74 extending circumferentially around the shaft carrier flange 72. A bearing assembly 76 is mounted into the end of the shaft carrier housing 60 adjacent the shaft carrier flange 72, and rotatably supports the end of the shaft 70 attached to the rotor 22.

The driving end of the shaft 70 which extends out of the outlet end of the filter device 20 is supported by a second bearing assembly 80, which is mounted within a bearing preload sleeve 82 slidably mounted in the outlet end of the shaft carrier housing 60, and retained within the shaft carrier housing 60 by a retaining bolt 84. Mounted within the bearing preload sleeve 82 and acting on the shaft carrier housing 60 through a number of shims 86 is a spring 90, which tends to urge the rotor 22 onto the shaft carrier housing 60. Tension in the spring 90 is adjusted by a retaining nut 92 mounted on the shaft 70 and causing the bearing preload sleeve 82 to be adjusted within the shaft carrier housing 60. Thus when the shaft 70 is driven, the rotor 22 is caused to rotate within the filter device 20. Of course, the mounting arrangement used in FIGURE 1 to rotatably mount the rotor 22 within the filter device 20 is only one arrangement which has been found to be acceptable, and other arrangements are possible.

## OPERATION OF THE DEVICE

When the shaft 70 is driven causing the rotor 22 to rotate at high speed, the inducer blades 30 will draw the contaminated airstream into the filter device 20. The airstream will move from the inducer blades 30 to the driving blades 32, which are moving at high speed relative to the main housing 24 adjacent the edges of the driving blades 32. The airstream between the driving blades 32 contains particles which will tend to be thrown outward due to the centrifugal force caused by the high speed rotation of the rotor 22. Therefore it can be seen that most of the particular matter in the airstream will be swirling near the main housing 24, at which location it can be removed from the filter device 20.

Three discard removing channels 100, 102, and 104 are located in the main housing 24. These discard removing channels 100, 102, and 104 are basically grooves which are machined into the main housing 24, and which therefore are of a slightly greater diameter than the rest of the portion of the main housing 24 adjacent the driving blades 32. Since the diameter of each of the discard removing channels 100, 102, and 104 is greater than that of any other portion of the main housing 24 adjacent the driving blades 32, particulate matter, which is heavier than the gaseous medium in which it is suspended, will tend to be thrown outward into these discard removing channels 100,102, 104 and will circulate therein.

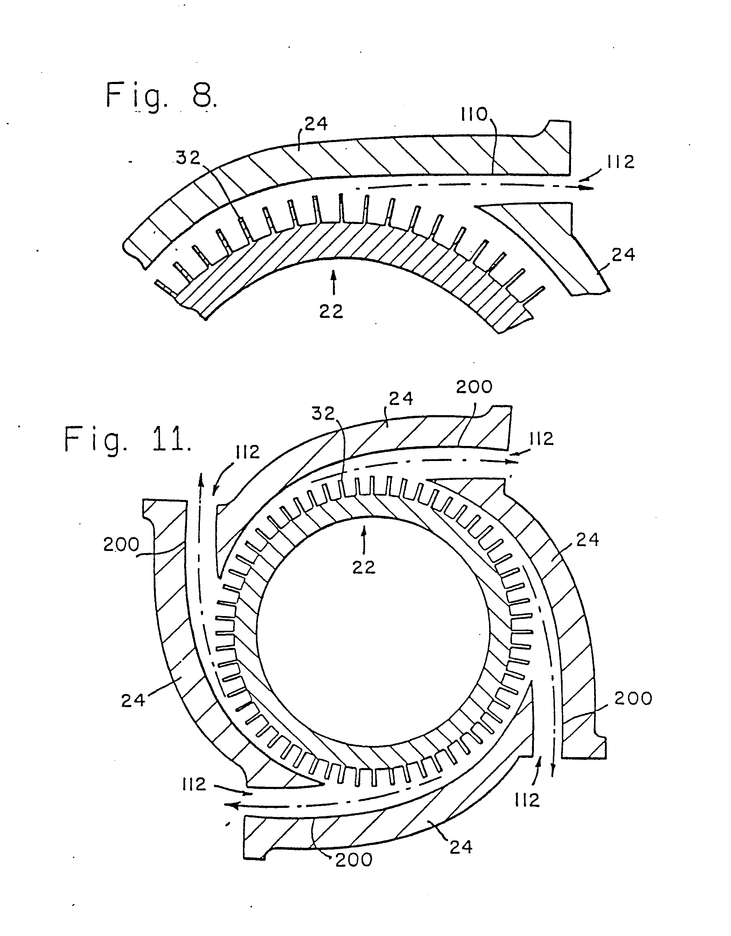

At some portion in the circumference of the main housing 24 and each of the discard removing channels 100,102, and 104, the particulate matter circulating in the discard channels 100, 102, and 104 will be removed from the filter device 20. One possible arrangement for this particulate removal is shown in FIGURE 8, which is a partial cross-sectional view of one of the discard removing channels 100, 102,and 104. The particular discard removing channel shown in FIGURE 8 is a tangential discard channel 110 so named because particulate matter exiting the filter device 20 through the tangential discard channel 110 leaves in a scavenging outflow 112 tangential to the path of the driving blades 32. Since the actual size of the tangential discard channel 110 is fairly small, only a small amount of gas from the airstream is required to carry the particulate matter through the tangential discard channel 110 out of the filter device 20. This aspect of the invention and other possible configurations for the discard removing channels 100, 102, and 104 will be discussed later. Also, it should be noted that the discard removing channels may be machined to extend axially in the interior of the housing, with small holes in the axial channels allowing the particles to exit the device.

Returning to FIGURE 1, it can be seen that the discard removing channel 100 is larger and deeper than the discard removing channels 102 and 104. The reason for this is that the larger particles will be removed at the first discard removing channel 100, since they will immediately move to the outside of the flow path between the driving blades 32 and the main housing 24. In fact virtually all particles above a 10 micron diameter will be removed at the first discard removing channel 100. The smaller particles will be removed mainly at the second and third discard removing channels 102 and 104.

In order to remove virtually all particles down to a size of 1 to 2 microns, a sufficient amount of centrifugal force must be applied to particles suspended in the airstream. It will be immediately recognised that the centrifugal force is dependent upon the speed and the diameter of the rotor 22. Even with rotor diameters of less than 304.8mm - (one foot) the filter device may be constructed using present high speed technology so that it will achieve the desired efficiency. Therefore, it can be seen that the filter device 20 is considerably more compact than cyclone or vortex type inertial separators.

Referring now to FIGURE 4, a filter device 120 is shown which operates on the pressure drop between the inlet end and the outlet end of the filter device 120. A housing 122 surrounds a rotor 124 in a manner very similar to the principles explained above with reference to the filter device shown in FIGURE 1. The rotor 124 has a number of driving blades 126 each of which has an axial flow inducer blade portion 130 at one end. By axial flow it is meant that the airstream enters the device basically in a straight line rather than entering near the centre of the rotor and moving radially outward to reach the blades, as it did in the device of FIGURE 1. Alternate driving blades 126 have oblique exducer blade portions 136 extending at their other ends.

For the filter device 120 shown in FIGURE 4, the air stream enters through inlet vanes 131 mounted between an inlet shroud 132 which is attached to the main housing 122, and a shaft carrier assembly 134. The airstream will flow through the inducer blade portion 130 and between the driving blades 126, will exit the rotor 124 through the exducer blade portion 136, and will leave the filter device 120 through an outlet shroud 140 which is bolted onto the housing 122 by a number of bolts 142 extending circumferentially around the perimeter of the outlet shroud 140.

The rotor 124 consists of the driving blades 126 which are mounted on a rotor body 144, which is in turn mounted onto a shaft 146. The inlet end of the rotor 124 and the shaft 146 are supported by a bearing assembly 150, which is mounted in the shaft carrier assembly 134. The outlet end of the rotor 124 and the shaft 146 are rotatably mounted in a second bearing assembly 152, which is supported by a support assembly portion 154 connected by a number of shaft carrier bars 156 to the outlet shroud 140. Thus, it can be seen that the rotor 124 will turn freely within the housing 122.

FIGURES 5 and 6 show the rotor 124, which is particularly designed to operate with a pressure drop of approximately 254mm (10 inches) $H_2O$ while removing virtually all particles down to a size of between 1 and 2 microns. This performance is achieved in a package with an overall diameter of approximately 228.6mm (nine inches). The filter device 120 may thus be operated in the intake system or exhaust system of an I.C. engine, and will be operated by the vacuum of the intake or pressure of the exhaust. Particles removed by the filter device 120 exit the device through three discard removing channels 160, 162, and 164 operating as described above, channel 162 being smaller than channel 160, and channel 164 being smaller than channel 162.

The rotary filter device 20 shown in FIGURE 1 utilises radial outflow geometry and the filter device 120 shown in FIGURE 4 utilises axial flow geometry. A third type of inducer flow geometry is mixed flow geometry which is used in the embodiment shown in FIGURE 7, and is a compromise between radial outflow geometry and axial flow geometry. A rotor 170 is shown in FIGURE 7, comprising mixed flow inducer blades 172, driving blades 174, and exducer blades 176 mounted on a rotary body 180. The rotor 170 is rotatably mounted within a housing 182, and is supplied with an air stream through an inlet shroud 184. The mixed flow inducer geometry may be used in a variety of applications, including in an environment containing only a small amount of larger particles, and is more aerodynamically efficient than other configurations, thus resulting in reduced power consumption. The radial outflow inducer design may be useful in environments containing increased quantities of larger particles, and the axial flow design may be useful in environments containing only minimal amounts of larger particles. The logic behind selection of the appropriate inducer design being dictated by the environment in which the filter device is to operate is apparent when it is noted that the larger particles may be particularly destructive of the driving blades, and therefore it is highly desirable to remove the larger particles at the first discard removing channel location, rather than allowing them to travel along the driving blade path. As in figure 4, the three discard channel grooves are succesively smaller in depth, diameter and cross section, in the axial flow direction of the housing of FIGURE 7.

Another optional design modification of the FIGURE 1 construction in FIGURE 7 is the increasing diameter rotor driving blade design illustrated at 190. An increase in the diameter of each driving blade 174 along its length may prevent particles from remaining in a swirl pattern between discard removing channels. By progressively slightly increasing the diameter of the driving blades 174 along their lengths in the direction away from the inducer blades 172, and shaping the housing 182 to increase its internal diameter slightly and progressively in the direction away from its inlet end 184 so as to follow the contour of the driving blades 174, it may be ensured that particles which might otherwise swirl between two axially-spaced circumferential discard removing channels will tend to tumble along to the next discard removing channel, at which point the particles will be removed. The benefits of such a design are reduced wear on the driving blades 174, and the housing 182, and a reduction in the amount of particle breakup caused by particles continuing to remain in the driving blade 174 area without being removed from the device.

DISCARD REMOVING CHANNEL ALTERNATE CONFIGURATIONS

The tangential discard channel 110 which has been discussed above is the simplest type of discard removing channel. It consists of a concentric circumferential groove in the housing 24 with one or more passages through the housing 24, each at a tangent to the groove. The groove and single passage shown in FIGURE 8 form the tangential discard channel 110, and particles circulating between the driving blades 32 and the housing 24 will be impelled through the tangential discard channel 110, these particles and the small amount of scavenging air accompanying them comprising the scavenging outflow 112.

Thus, it can be seen from FIGURES 1 and 8 that only three small outlet passages provide the means through which particulate matter separated from the airstream is removed form the filter device 20. Thus, only a very small amount of scavenging air flow is removed from the airstream to carry the particulates out of the filter device 20. More primitive rotary filter devices required a fairly large amount of scavenging air to carry the particulates out of the device, the amount of scavenging air being approximately 20 to 25% of the volume of the airstream flowing through the device. Such heavy losses would preclude the successful operation of a filter device driven by a pressure drop, such as the filter device 120 shown in FIGURE 4.

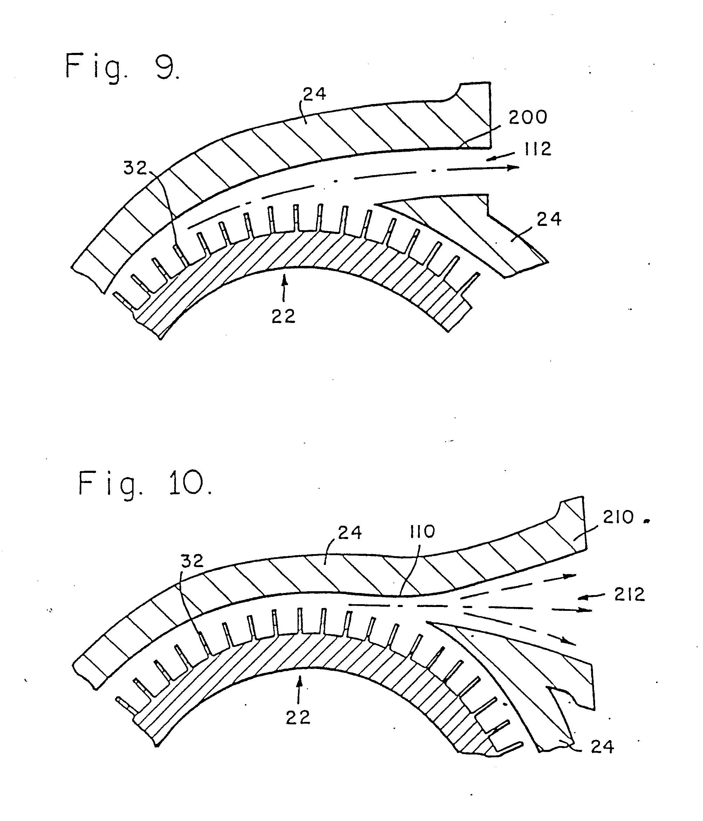

The design of the discard removing channel shown in FIGURE 8 and its modified forms shown in FIGURES 9, 10, and 11, any of which can be utilised in the embodiments of FIGURES 1,7,13 and 14, thus represent substantial improvements over existing designs and would use only a small percentage of the volume of airstream as scavenging air, thus greatly reducing airflow losses.

In FIGURE 9, a scroll-shaped discard channel 200 is illustrated. The scroll-shaped discard channel 200 is similar to the tangential discard channel 110, but the grooved portion in the housing increases in depth as it approaches the location of the passage through which the scangenging outflow 112 leaves the filter device. This configuration may be more efficient in removing particles from the grooved portion to the outlet passage portion of the channel 200. Thus, the main housing 24 more closely adjoins the driving blades 32 at locations away from the outlet portion of the scroll-shaped discard channel 200.

In FIGURE 10, a tangential discard channel 110 is illustrated with a diffuser 210, which acts to remove the energy from the scavenging air and particles exiting the filter device as the diffuser scavenging outflow 212. This feature permits the discard operation to occur even if the static pressure within the device 20 is less than the static pressure of the environment to which the particles are removed, since the dynamic pressure maintained by the high airflow velocity within the device 20 is converted to static pressure by the diffuser 210, thus raising the static pressure of the outflow 212 as it exits the device 20 through the diffuser 210. Also, maintaining a lower static pressure within the device 20, which is made possible by the use of the diffuser 210, means that the device 20 will require less power to drive it.

FIGURE 11 illustrates another modification in which there are four scroll-shape discard channels 200 located in the main housing 24 of the rotary filter device 20. Such an application would probably be useful only with extremely high air flow volumes, since the losses would be increase fourfold.

## THE SECONDARY FLOW VELOCITY PROBLEM

The high speed rotation of the airstream through the filter device 20 between the driving blades 32 and the housing 24 may cause unwanted secondary flow velocities of two types, namely inertial type secondary flow, and frictional or viscous type secondary flow. Of these types, frictional or viscous type secondary flow is the more serious, and is illustrated in FIGURE 12. The rotor 22 is rotating at high speed in the direction shown relative to the main housing 24, and this high speed rotation will cause a swirling in the area indicated as the secondary flow swirl 220. While the heavier particles will resist the secondary flow swirl 220 and be forced radially outward towards the main housing 24 where they can be removed by the discard removing channels 100, 102 and 104, - (FIGURE 1), the smaller and lighter particles suspended in the airstream may become entrained in the secondary flow swirl 220 thus effectively preventing their removal from the filter device 20. In addition, this swirling will cause the particles entrained therein to move violently within the area defined by the driving blades 32, and the main housing 24, thus possibly causing particle breakup, further hindering the removal of the particles. The present invention presents two possible solutions to the problem of secondary flow velocities.

## THE BLADELESS ROTOR SOLUTION

FIGURE 13 illustrates a motor-driven separator 230 in which rotor 232 having no driving blades is rotatably mounted within a housing 234, which is formed integrally with an inlet shroud 242. The rotor 232 is supported at the outlet end by a shaft carrier assembly 250 which is contained in an outlet assembly 252 mounted onto the housing 234. An electric motor assembly 260 is contained within the rotor 232 with the stator portion of the motor assembly 260 being non-rotatably mounted to the outlet assembly 252. The rotor portion of the motor assembly 260 is mounted on a shaft 262, which is connected to and drives the rotor 232 when the rotor of the motor assembly 260 is caused to rotate by electric current. It should be noted that the motor assembly 260 is standard in the art, and not a point of novelty with the present invention.

The rotor 232 has a number of inducer blades 270 mounted at the inlet end of the rotor 232 in a mixed flow configuration, and the airstream will enter the filter device 230 through a number of inlet vanes 272 mounted in the inlet shroud 242. The rotor 232 also nas a number of exducer blades 280 mounted at the outlet end of the rotor 232, and th airstream exits the device from the exducer blades 280 and through the outlet assembly 252.

The portion of the rotor 232 which does not contain blades is the surface area 290 between the inducer blades 270 and the exducer blades 280, which is the portion of the rotor in which the main portion of the secondary flow velocities occur if blades are present as illustrated in FIGURE 12. The particular configuration of the rotor surface area 290 has been found to produce acceptable separation characteristics.

The airstream is accelerated up to the proper angular velocity by the inducer blades 270 so it will enter a swirl area 292 (defined by the housing 234 and the rotor surface area 290) with the desired angular velocity. The particulates present in the airstream will be forced by the high angular velocity to migrate to the area adjacent the housing 234 with air removed by a pair of discard removing channels 294 and 296. Most of the larger particles will exit the device 230 through the first discard removing channel 294 while most of the smaller particles will exit through the second and smaller discard removing channel 296 which is located near the outlet end of the swirl area 292. The exducer blades 280 act to remove energy from the airstream before it leaves the filter device 230 through the outlet assembly 252 and help make possible the maintenance of the high angular velocity within the limits of the rotor surface area 290.

The motor driven filter device 230 shown in FIGURE 13 despite being slight less efficient than the versions described herein which have driving blades, is capable of separating virtually all particles down to a 2 micron diameter in a package approximately 254 mm (10 inches) in diameter and 381 mm (15 inches) in length, with a speed less than 17,000rpm . Since the filter device 230 is completely self-powered and self-contained, it is ideal for use in a military application as a military vehicle cabin ventilation unit for removing particulates from the crew air supply.

It is worth noting that a similar package may be easily manufactured using a bladed rotor such as that shown in the device illustrated in FIGURE 1

## THE SHROUDED ROTOR SOLUTION

A second solution to the secondary flow velocity problem described above is to cover the driving-bladed portion of a rotor 300 similar to the rotor 22 of FIGURE 1 with a porous shroud 310, as illustrated in FIGURE 14. In designing the porosity of the shroud 310, there are two considerations. First, the porous shroud 310 must be open enough to permit the free flow of particulates migrating radially outward so that they may reach the discard removing channels and be removed from the filter device 20; second, the porous shroud 310 must be closed enough to minimise to the extent physically possible the secondary flow swirl 220 illustrated in FIGURE 12.

There are several other design considerations dictating the form of the porous shroud 310. The strength of the shroud material must be strong enough to withstand the high centrifugal force imposed at the tips of the driving blades 320. Also, the shroud 310 must be highly resistant to clogging caused by particle collection diminishing the porosity of the shroud 310.

Several possible methods of making such a porous shroud 310 including making the shroud from a metallic wire mesh or other filamentary material such as glass fibres, or plastics. The shroud 310 can be made by forming tiny perforations in sheet stock made of metal or some other material. A highly controllable method of fabricating a porous shroud 310 is to wind a high strength wire tightly around the driving blades 320 at a preselected pitch or helix angle to achieve the desired porosity. Such a method has the advantage of prestressing the shroud material so that it will not expand during rotation and migrate axially off the driving blades 320.

Such a porous shroud 310 is illustrated in FIGURE 14, and in the magnified sectional view of FIGURE 14A. The porosity of the shroud 310 shown is 14.2% which, by way of example, may be achieved by making the shroud 310 from 156 turns of 0.838mm(0.033 inch) diameter wire wound around a rotor 22 with a 152.4mm (6 inch) portion of the driving blades 320 being wrapped (1.023 turns/mm or 26 turns/inch). Such a design will effectively reduce secondary flow velocities and will increase the efficiency of the filter device 20 in removing particulates between 10 microns and 2 microns from the airstream travelling through the filter device 20, although effective porosity may vary from 5-30%

Thus, it can be seen that the present invention will filter both large and small particles from an airstream without requiring cleaning, repair or replacement of a filter element. The above description of the preferred embodiments of the invention is not intended to limit the scope of the invention in any way; for example, the present invention may be used to remove particles and heavies from a liquid flowing through the device, the characteristics of the invention allowing for greater efficiency in the removal of small particles than that of a centrifuge. The filter devices disclosed are of a minimal size, weight, and cost, particularly when compared to pre-existing devices described above. The devices are entirely self-contained, and are easy to manufacture as bolt-on units.

Such design capabilities enable the filter devices described herein to be utilised in removing dust from an intake system of an engine, in rcmoving dust from air to be supplied to the crew of a sealed vehicle, in removing lead particles from exhaust of a gasoline engine, and in removing carbon particles from the exhaust of a diesel engine. The devices thereby present highly improved performance over the pre-existing art without presenting any of the disadvantages of that art.

It will be understood that many cross-combinations of the features shown in the various illustrated embodiments are possible. Thus the feature of the progressively-increasing driving blade diameter shown in Figure 7 could be incorporated in the motor-driven device of Figure 1 having a radial-outflow inducer blade geometry, and likewise in the axial-flow turbine-driven device of Figures 4 to 6. A radial-outflow or mixed-flow inducer blade configuration could be incorporated in a turbine-driven device such as that of Figures 4 to 6, and the devices of Figures 7 and 13 could be modified to an axial-flow inducer blade configuration. Other possible cross-combinations of the features of the various illustrated embodiments will be apparent to the person skilled in the art. For example, a porous shroud, for example of the wound wire construction described with reference to Figures 14 and 14A, may be applied to the rotors of either of the embodiments of Figures 4 to 6 and Figure 7, which rotors have driving blades 126 and 174 respectively.

## Claims

1. A filter device (20,120) for removing particles from a fluid medium, which comprises a housing - (24,122, 182,234) having an inlet end - (40,132,184,242) affording a fluid inlet and an outlet end (50,140,252) affording a fluid outlet, a rotationally-driven rotor (22,124, 190,232,300) mounted in the housing and defining an annular-section space between the body (34,144,180,232) of the rotor and the circumferential wall of the housing, along which space a fluid stream to be filtered flows in use in the axial direction from the inlet to the outlet, and means for driving the rotor at high rotational speed to cause the fluid stream to swirl at high speed around the body of the rotor in the annular-section space so as to subject particles in the fluid stream to centrifugal acceleration causing them to migrate to the outer portion of the space immediately adjacent to the circumferential wall of the housing, and in which the housing is provided with means (100,102,104,110,160, 162,164,200,210) for removing the migrated particles from the said outer portion of the annular-section space to a location outside the housing; characterised by the said means for removing the migrated particles comprising at least two axially-spaced grooves (100, 102, 104; 160, 162, 164; 294, 296) formed in the internal surface of the circumferential wall of the housing (24 etc.).

2. A filter device as claimed in Claim 1 in which each groove has at least one passage extending through the housing wall to allow the escape of the migrated particles from the interior to the exterior of the housing.

3. A filter device as claimed in Claim 2 in which the said passage (110) tangentially intersects the groove (100,etc) to permit particles collected in and rotating around the groove to enter the passage and pass out of the housing therethrough.

4. A filter device as claimed in Claim 1 or Claim 2, or Claim 3 in which each groove extends around the entire circumference of the internal surface of the said wall.

5. A filter device as claimed in any of Claims 1-4, in which each groove (100 etc), is of uniform depth around the entire said circumference.

6. A filter device as claimed in any of Claims 2-5, constructed and arranged so that a small portion of the fluid stream flowing in the annular-section space is diverted to flow outwardly through the said passage (110,280,210) to scavenge the collected particles therethrough.

7. A filter device as claimed in any of Claims 2-6, in which the said passage increases in cross section along its length in the direction towards the exterior of the housing (24) so as to act as an aerodynamic diffuser (210) for a scavenging fluid flow through the passage.

8. A filter device as claimed in any of Claims 1-7 in which the depth of the or each groove (100 etc) increases along a portion of the circumference of the groove leading to the point of communication with the passage (200) in the direction of particle rotation around the groove.

9. A filter device as claimed in any of Claims 2-8 wherein the passage (110 etc), comprises a passage extending through the wall of the housing (24) and being of increasing cross-sectional area - (at 210) in the direction towards the exterior of the housing.

10. A filter device as claimed in any of Claims 2-9, having at least one additional said passage - (200) communicating with the groove (100 etc), at a different point in the circumference thereof and also extending through the housing wall to the exterior of the housing (24), the depth of the groove near the or each additional passage (200) similarly increasing along the portion of the groove circumference leading to the said point of communication.

11. A filter device as claimed in any of Claims 1-10, in which the depth of a groove (102 etc) is substantially less than that of the groove (100,102 etc), next adjacent to it in the upstream direction with respect to the flow direction of the fluid stream.

12. A filter device as claimed in any of the Claims 1 to 11, in which the means for subjecting the particles to centrifugal acceleration comprise driving blades (30, 32, 36; 172, 174, 176; 126; 270, 280) rotating with the rotor (22, 124, 190, 232, 300).

13. A filter device as claimed in Claim 12, in which the driving blades (270, 280) are confined to the parts of the rotor (232) which are not positioned axially between the axially-spaced grooves (294, 296).

Fig. 1.

Fig. 2.

0 227 089

Fig. 3.

Fig. 4.

Fig. 5.

Fig. 6.

Fig. 7.

Fig. 8.

Fig. 11.

Fig. 9.

Fig. 10.

Fig. 12.

Fig. 13.

Fig. 14.

Fig. 14A.